# EUROPÄISCHE PATENTSCHRIFT

(11) **EP 1 236 563 B1**
(45) Veröffentlichungstag und Bekanntmachung des Hinweises auf die Patenterteilung: **14.12.2005**
(21) Anmeldenummer: 02001319.9
(22) Anmeldetag: 18.01.2002
(51) Int. Cl.: B29C 65/08, B29C 65/64, H01R 4/02, B23K 1/06

(54) **Elektrische Verbindung mittels Ultraschall-Löten**
Electrical connection by ultrasonic welding
Connexion électrique par soudage ultrasonique

(30) Priorität: 16.02.2001 DE 10107741; 07.09.2001 DE 10143908
(43) Veröffentlichungstag der Anmeldung: 04.09.2002
(73) Patentinhaber: Hirschmann Automotive GmbH, 6830 Rankweil-Brederis (AT)
(72) Erfinder: Kreuter, Markus, 6845 Hohenems (AT); Reiss, Thomas, 6830 Rankweil/Brederis (AT); Feder, Roland, 6820 Gurtis (AT)
(74) Vertreter: Thul, Hermann

(56) Entgegenhaltungen:
- GB-A- 2 350 732
- US-A- 6 018 127

## Beschreibung

Die Erfindung betrifft ein Verfahren gemäß dem Oberbegriff des Patentanspruchs 1.

Es sind schon Verfahren zur Herstellung einer elektrischen Verbindung zwischen zwei elektrisch leitenden Kontaktpartnern bekannt, bei denen die zu kontaktierenden Bereiche der Kontaktpartner durch eine Hitzequelle (z. B. Lötkolben) unter Zugabe von Lötzinn oder dergleichen miteinander verlötet werden.

Ebenso können die Kontaktpartner dadurch miteinander verbunden werden, daß sie durch ein Lotbad bewegt werden.

Ebenso ist es bekannt, die Kontaktpartner in ihrem Kontaktbereich durch Erhitzung mittels eines Laserstrahles zu verbinden.

Bei den eingangs geschilderten Verfahren ist es erforderlich, daß der Kontaktbereich, in dem die Kontaktpartner miteinander verbunden werden sollen, von außen zugänglich ist. Dadurch gestaltet sich die Formgebung eines Gehäuses aufwendig. Außerdem besteht ein solches Gehäuse aus mehreren Teil, die mit aufwendigen Mitteln oder aufwendigen Verarbeitungsschritten miteinander verbunden werden müssen. Sollen die Gehäuseteile miteinander verklebt werden, werden gesundheitsschädliche Lösungsmittel frei. Außerdem ist die Dichtheit der Verbindung mehrerer Gehäuseteile nicht gewährleistet.

Neben dem Verlöten der Kontaktpartner besteht grundsätzlich die Möglichkeit einer mechanischen Verbindung (wie z. B. Crimpen), die jedoch den Nachteil hat, daß sich die Verbindung bei rauhen Umgebungsbedingungen, wie insbesondere Vibrationen, lösen kann.

GB-A-2 350 732 beschreibt ein Verfahren gemäß dem Oberbegriff von Anspruch 1, wobei die in einem Gehäuse angeordneten Kontaktpartner innerhalb des Gehäuses in einem Kontaktbereich zusammengebracht und im Kontaktbereich vorhandenes Lotmaterial durch Ultraschalleinwirkung zum Schmelzen gebracht wird.

Der Erfindung liegt daher die Aufgabe zugrunde, ein Verfahren zur Herstellung einer elektrischen Verbindung anzugeben, mit dem die eingangs geschilderten Nachteile vermieden werden.

Diese Aufgabe ist durch die Merkmale des Patentanspruchs 1 gelöst.

Das erfindungsgemäße Verfahren ist dadurch gekennzeichnet, daß das Gehäuse zumindest eine Erhebung aufweist, die durch Ultraschalleinwirkung zum Schmelzen gebracht wird, wobei die dabei entstehende Wärmemenge das Lotmaterial zum Schmelzen bringt.

Es bietet sich in erfindungsgemäßer Weise an, gleichzeitig mit der Verbindung des Trägers oder der Ummantelung mit dem Gehäuse auch die elektrische Verbindung der beiden Kontaktpartner mittels Ultraschalleinwirkung (Ultraschall-Lötung) vorzunehmen. Dies hat den Vorteil, daß in einem Arbeitsdurchgang sowohl die elektrische Verbindung der Kontaktpartner als auch die Verbindung des Gehäuses mit dem Kabel und die Verbindung der Gehäuseteile untereinander fertiggestellt werden. Dies erfolgt in besonders vorteilhafter Weise dadurch, daß das Gehäuse aus mehreren Teilen (insbesondere zwei Hälften) besteht, die mittels Ultraschalleinwirkung miteinander verbunden werden, wobei gleichzeitig die elektrische Verbindung hergestellt wird.

Bei den zu verbindenden Kontaktpartnern handelt es sich z. B. um Stecker oder Buchsen, Kontaktstifte oder dergleichen und ebenso um elektrische Leiter, wie z. B. Rundkabel mit starrer oder flexibler Litze, um starre oder flexible Flachbandleiter, um in Kunststoff eingebettete Stanzgitter oder dergleichen usw. Mit dem erfindungsgemäßen Verfahren sind reine Verbindungsstellen herstellbar, während gleichzeitig aber auch Steckverbinder hergestellt werden können. Diese Verbindungsstellen oder die Steckverbinder bestehen aus nur einem Stecker oder einer Buchse, die mit einem Kabel oder einem Flachleiter verbunden werden oder auch aus mehreren, nebeneinanderliegenden Steckern, Buchsen oder elektrischen Leitern.

Es bietet sich in erfindungsgemäßer Weise an, gleichzeitig mit der Verbindung des Trägers oder der Ummantelung mit dem Gehäuse auch die elektrische Verbindung der beiden Kontaktpartner mittels Ultraschalleinwirkung (Ultraschall-Lötung) vorzunehmen. Dies hat den Vorteil, daß in einem Arbeitsdurchgang sowohl die elektrische Verbindung der Kontaktpartner als auch die Verbindung des Gehäuses mit dem Kabel und die Verbindung der Gehäuseteile untereinander fertiggestellt werden. Dies erfolgt in besonders vorteilhafter Weise dadurch, daß das Gehäuse aus mehreren Teilen (insbesondere zwei Hälften) besteht, die mittels Ultraschalleinwirkung miteinander verbunden werden, wobei gleichzeitig die elektrische Verbindung hergestellt wird.

Bei den zu verbindenden Kontaktpartnern handelt es sich z. B. um Stecker oder Buchsen, Kontaktstifte oder dergleichen und ebenso um elektrische Leiter, wie z. B. Rundkabel mit starrer oder flexibler Litze, um starre oder flexible Flachbandleiter, um in Kunststoff eingebettete Stanzgitter oder dergleichen usw. Mit dem erfindungsgemäßen Verfahren sind reine Verbindungsstellen herstellbar, während gleichzeitig aber auch Steckverbinder hergestellt werden können. Diese Verbindungsstellen oder die Steckverbinder bestehen aus nur einem Stecker oder einer Buchse, die mit einem Kabel oder einem Flachleiter verbunden werden oder auch aus mehreren, nebeneinanderliegenden Steckern, Buchsen oder elektrischen Leitern.

In einer besonders vorteilhaften Ausgestaltung wird das erfindungsgemäße Verfahren bei Steckverbindern oder bei der Verbindung von elektrischen Leitern, wie insbesondere Flachbandleitungen, in der Fahrzeugtechnik, insbesondere im Automobilbereich, angewendet. Diese Anwendung ist deshalb besonders vorteilhaft, weil auf einfache Art und Weise ein Steckverbinder oder eine Verbindung von Leitern hergestellt werden kann, die den Umgebungsbedingungen in der Fahrzeugtechnik (wie insbesondere Feuchtigkeit, schwankende Temperaturen, Vibrationen und dergleichen) standhält. Einerseits sind die beteiligten Kontaktpartner zuverlässig durch das Gehäuse lagefixiert und vor äußeren Einflüssen geschützt, während zum anderen durch die Lötverbindung diese äußerst zuverlässig und langzeitstabil ist.

Verschiedene Ausführungsbeispiele, die nach dem erfindungsgemäßen Verfahren hergestellt sind, sind im folgenden beschrieben und anhand der Figuren erläutert.

Es zeigen:
- Figur 1: eine elektrische Verbindung zwischen einem Kabel und einem Flachleiter,
- Figur 2: eine elektrische Verbindung zwischen einem Stecker und einem Flachleiter,
- Figur 3: Herstellung eines Steckers und Verbindung mit einer Buchse,
- Figur 4: Verbindung zwischen zwei Gehäusehälften unter gleichzeitiger Herstellung der elektrischen Verbindung,
- Figur 5: Herstellung eines Steckers mit Zugentlastung,
- Figuren 6 und 7: einen Stecker mit Druckelement zur Kontaktierung.

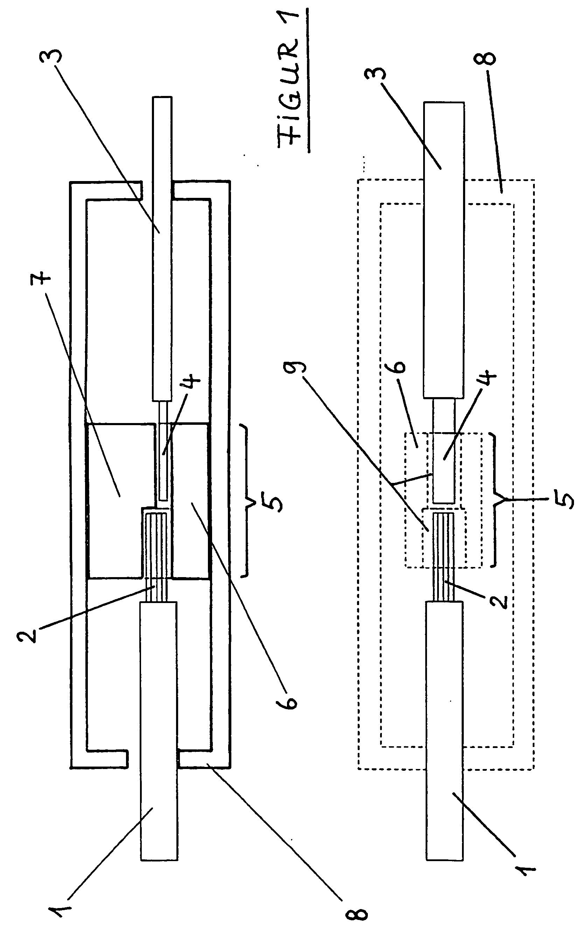

Figur 1 zeigt eine elektrische Verbindung, die nach dem erfindungsgemäßen Verfahren hergestellt ist. Bei den beiden Kontaktpartnern handelt es sich zum einen um ein Kabel 1 mit seiner innenliegenden Litze 2 sowie um einen Flachleiter 3 mit einer Leiterbahn 4. Der Flachleiter 3 kann starr oder flexibel sein, wobei innerhalb des Flachleiters 3 eine Leiterbahn 4 oder auch mehrere, parallel liegende Leiterbahnen angeordnet sind. Die Endbereiche der Litze 2 bzw. der Leiterbahn 4 stoßen in einem Kontaktbereich 5 stumpf aufeinander, wobei die Litze 2 sowie die Leiterbahn 4 auf einer nicht leitenden Auflage 6 (insbesondere aus Kunststoff) aufliegen. Die Enden der Litze 2 und der Leiterbahn 4 sind vor dem Verlöten verzinnt, wobei es auch denkbar ist, daß z. B. zwischen diesen Bereichen und der Auflage 6 eine Lötzinnschicht zwischengelegt ist. Die Endbereiche der Litze 2 sowie der Leiterbahn 4 werden von einer Erhebung 7 auf die Auflage 6 gedrückt, wobei der Druck dadurch erzeugt wird, daß die Auflage 6 sowie die Erhebung 7 innerhalb eines Gehäuses 8, das den Kontaktbereich 5 vollständig umschließt, angeordnet sind. Im unteren Teil der Figur 1 ist gezeigt, daß die Auflage 6 mit einem verzinnten Bereich 9 versehen ist. Die Erhebung 7 (ERG = Energierichtungsgeber) wird durch die Ultraschalleinwirkung zum Schmelzen gebracht. Die dabei enstehende Wärmeenergie wird dazu genutzt, das vorhandene Lotmaterial zum Schmelzen zu bringen und/oder Kunststoff zu erwärmen, so daß sich anliegende Bereiche verschweißen, also unlösbar miteinander verbinden. Die Erhebung 7 kann punktförmig oder länglich ausgestaltet sein. Darüber hinaus kann sich einfach oder mehrfach vorhanden sein.

Bei Betrachtung des oberen Teiles der Figur 1 wird der Kontaktbereich 5 bzw. der gesamte von dem Gehäuse 8 umschlossene Bereich einer Ultraschalleinwirkung (z.B. ein Ultraschall erzeugender Stempel) ausgesetzt, so daß der verzinnte Bereich 9 (oder die verzinnten Enden der Litze 2 und der Leiterbahn 4) dadurch erhitzt und damit verlötet werden. Durch den Druck des Stempels von oben bewegen sich die beiden Hälften des Gehäuses 8 aufeinander zu, da ein Teil der aus Kunststoff bestehenden Erhebung 7 abschmilzt. Gleichzeitig mit der Erhitzung des verzinnten Bereiches 9 können auch die beiden Gehäusehälften durch die Ultraschalleinwirkung umlaufend miteinander verbunden (verschweißt) werden.

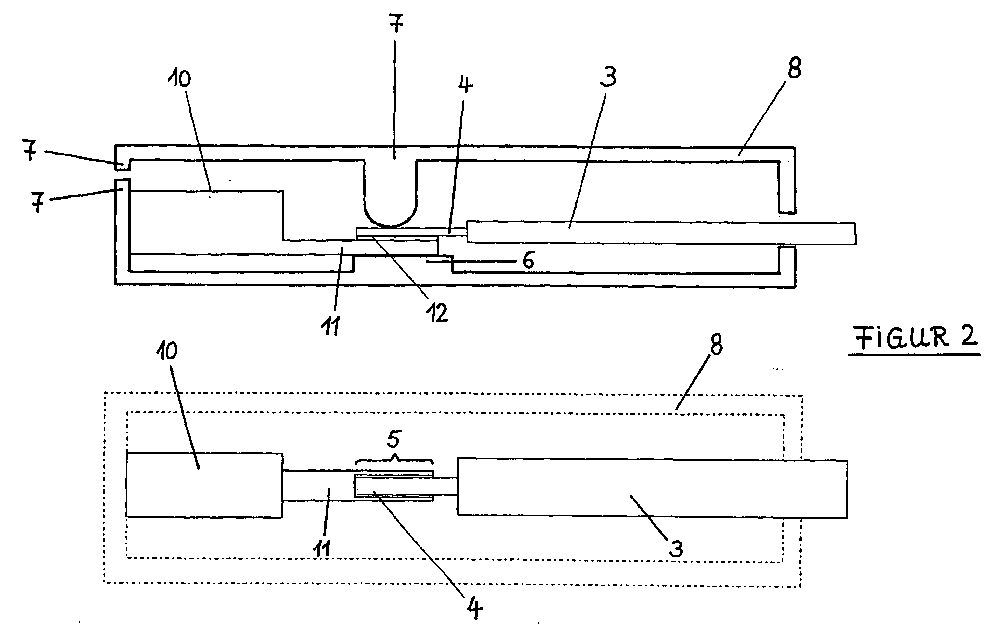

Figur 2 zeigt im oberen Teil in der Seitenansicht und im unteren Teil in der Draufsicht einen Steckverbinder, bei dem der eine Teil ein Stecker 10 (oder auch eine Buchse) mit einem Anschlußstück 11 ist, der mit der Leiterbahn 4 des Flachleiters 3 zu kontaktieren ist. Bei dieser Ausgestaltung überlappen sich der Endbereich der Leiterbahn 4 und der Endbereich des Anschlußstückes 11, wobei zwischen diesen beiden eine Zinnlage 12 (Lötzinn) zwischengelegt ist. Durch die mit dem Gehäuse 8 einteilig gestaltete Erhebung 7 werden die Kontaktpartner wieder unter Druck auf die Auflage 6, die ebenfalls Bestandteil des Gehäuses 8 ist, gedrückt. Auch hier wird die Zinnlage 12 durch die Ultraschalleinwirkung zum Schmelzen gebracht und verlötet damit die Endbereiche der Leiterbahn 4 und des Anschlußstückes 11 im Kontaktbereich 5. Innerhalb des Gehäuses 8 kann nur ein Stecker 10 vorhanden sein, wobei jedoch im Regelfall mehrere, parallel liegende Stecker 10 (oder Buchsen, Kontaktstifte oder dergleichen) angeordnet sind, die mit einer mehradrigen Leitung oder mit einem mehradrigen Flachleiter 3 zu verbinden sind.

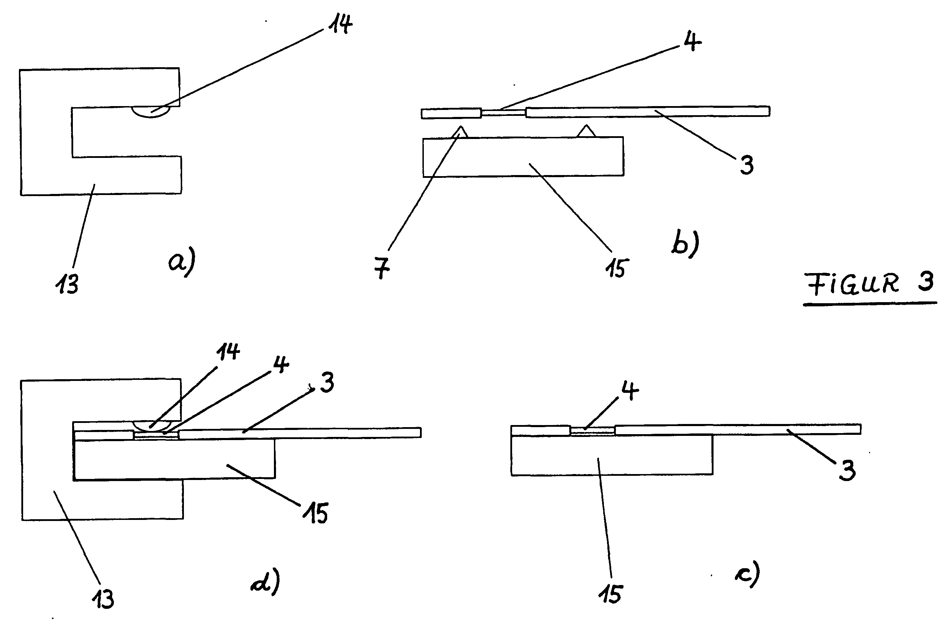

Figur 3 zeigt in Figur 3 a eine Buchsengehäuse 13, das in etwa U-förmig geformt ist. Auch dieses Buchsengehäuse 13 besteht aus Kunststoff und kann beispielsweise im Spritzgußverfahren hergestellt werden. Das Buchsengehäuse 13 weist einen Kontakt 14 (oder mehrere) auf, wobei an diesem Kontakt 14 zumindest ein weiterer elektrischer Leiter (nicht dargestellt) angeschlossen ist. Diese in Figur 3 a dargestellte Buchse kann auch Bestandteil beispielsweise einer elektronischen Schaltung sein, wobei dann die Buchse auf der Platine der elektronischen Schaltung angeordnet ist.

Figur 3 b zeigt einen Stecker vor seiner Verbindung mit dem Flachleiter 3, bei dem die Leiterbahn 4 bereichsweise freigelegt worden ist. Ein mit 15 bezeichnetes Steckergehäuse weist wieder Erhebungen 7 auf, die bewirken, daß die Erhebungen 7 die Leistung des Ultraschalls in den Flachleiter 3 bewirken. Dadurch kommt es zu einem Verschmelzen der Erhebungen 7 mit zumindest dem Träger (Trägerfolie) des Flachleiters 3 und gegebenenfalls seiner Deckfolie. Nach Wegnahme der Ultraschalleinwirkung liegt der Flachleiter 3 planparallel auf dem Steckergehäuse 15 auf, wie dies in Figur 3 c gezeigt ist. Nach diesem Herstellungsvorgang kann der Stecker in die schon beschriebene Buchse eingeführt werden, wie dies in Figur 3 d gezeigt ist. Es versteht sich von selbst, daß die geometrischen Ausführungen des Steckers und der Buchse nur beispielhaft sind und anders gewählt werden können, jedoch miteinander korrespondieren müssen. Bei dem Strecker liegt die freigelegte Leiterbahn 4 nicht vollständig auf dem Steckergehäuse 15 auf, so daß der Kontakt 14 die freigelegte Leiterbahn 4 geringfügig in Richtung des Steckergehäuses 15 andrücken kann, so daß Buchse und Stecker zuverlässig zusammengehalten werden.

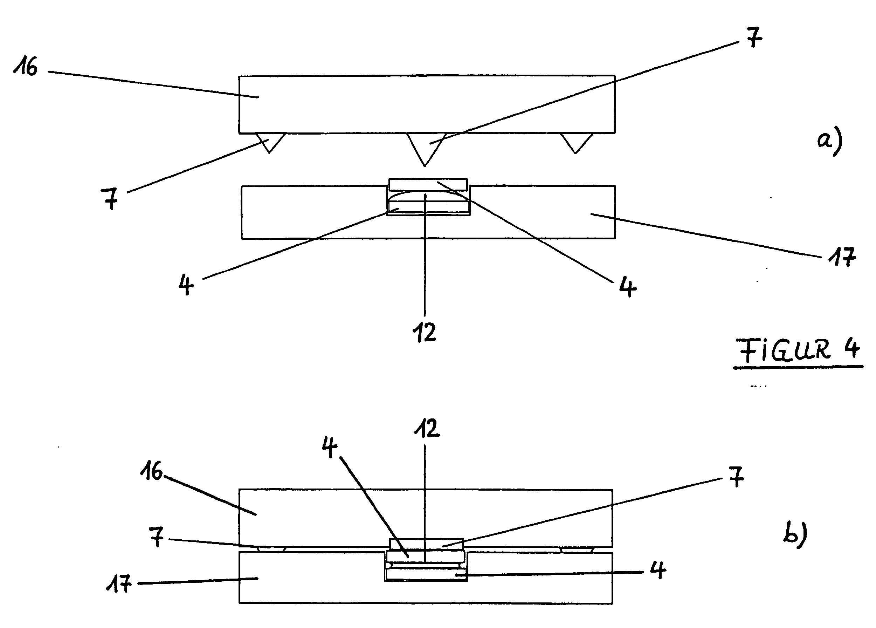

Figur 4 zeigt ein aus zumindest zwei Teilen 16 und 17 bestehendes Gehäuse, wobei an der Gehäusehälfte 16 die Erhebungen 7 angeordnet sind. Alternativ oder ergänzend dazu können auch Erhebungen 7 an der Gehäusehälfte 17 angeordnet werden. Die mittlere Erhebung 7 hat den Zweck, die Energie der Ultraschalleinwirkung in den Kontaktbereich einzuleiten, um die Zinnlage 12 zu schmelzen, um die beiden Leiterbahnen 4 miteinander zu verbinden. Gleichzeitig schmelzen die beiden außen liegenden Erhebungen 7, so daß dadurch die beiden Gehäusehälften 16 und 17 miteinander verbunden werden. In Figur 4 a ist die Herstellung der Verbindung vor der Ultraschalleinwirkung und in Figur 4 b nach der Ultraschalleinwirkung gezeigt, wobei in Figur 4 b deutlich erkennbar ist, daß die Erhebungen 7 weitestgehend zusammengeschmolzen sind, so daß die beiden Gehäusehälften 16 und 17 nahezu oder vollständig aufeinanderliegen. Das Zusammenschmelzen der Erhebungen 7 an der Gehäusehälfte 16 bewirkt nicht nur die Erhitzung der Zinnlage 12, sondern auch in den korrespondierenden Bereichen ein Anschmelzen der Gehäusehälfte 17, so daß eine vollständige Verbindung in diesem Bereich der beiden Hälften 16 und 17 erfolgt.

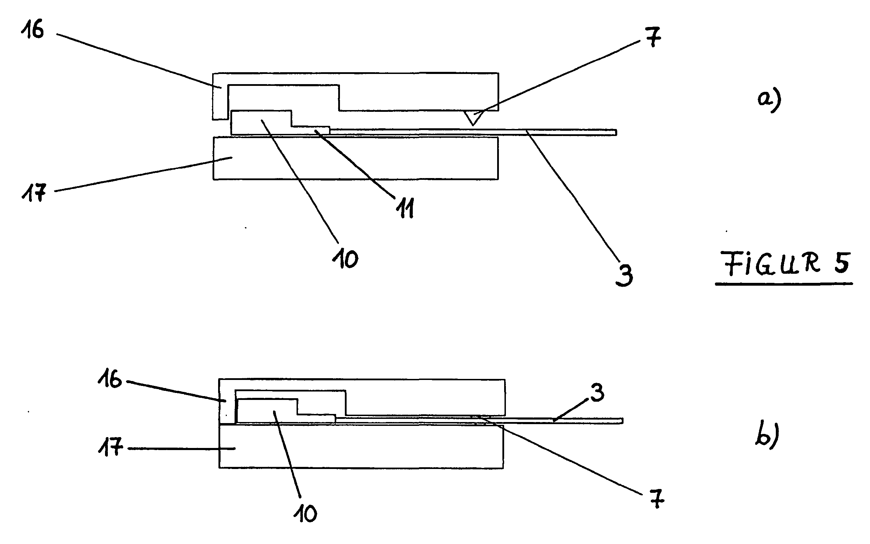

Figur 5 zeigt einen Steckverbinder, bei dem die beiden Gehäusehälften 16 und 17 durch Erhebungen 7 durch Ultraschalleinwirkung miteinander verbunden werden. Die in Figur 5 a gezeigte Erhebung 7 durchstößt bei Ultraschalleinwirkung die Trägerfolie des Flachleiters 3 in den Bereichen, in denen sich keine Leiterbahn 4 befindet, und gleichzeitig eine Verbindung mit der unteren Gehäusehälfte 17, so daß in diesem Bereich nicht nur die beiden Gehäusehälften 16 und 17 miteinander verbunden werden, sondern eine Zugentlastung des Flachleiters 3 bewirkt wird.

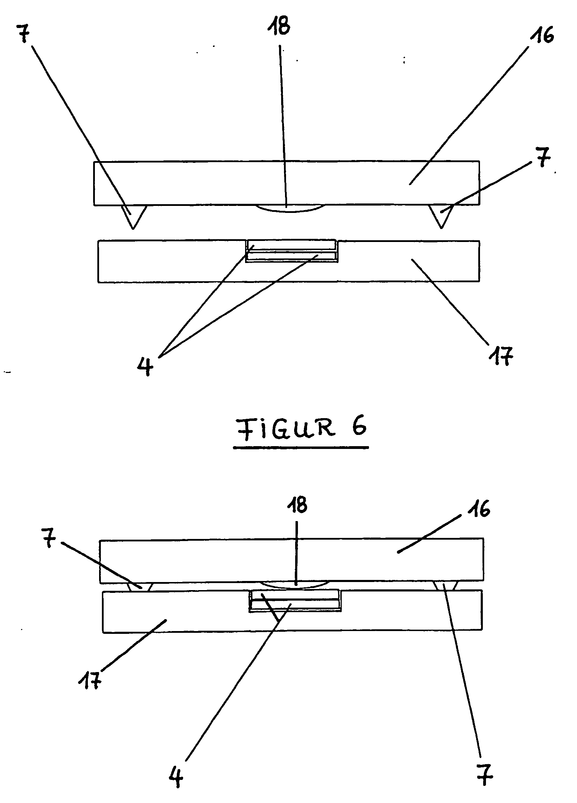

Figur 6 zeigt ebenfalls ein aus zumindest zwei Teilen 16 und 17 bestehendes Gehäuse, wobei an der einen Gehäusehälfte 16 die Erhebungen 7, die als Energierichtungsgeber für die Ultraschallverbindung ausgebildet sind, angeordnet sind. Die Gehäusehälfte 17 nimmt in einer Ausnehmung zumindest zwei übereinanderliegende Leiterbahnen 4 (Flachleiter) auf, wobei diese Leiterbahnen 4 im Kontaktbereich ein Lotmaterial aufweisen und von ihrem Träger freigelegt sind. Diesem Kontaktbereich der Gehäusehälfte 17 entsprechend weist die Gehäusehälfte 16 einen weiteren Energierichtungsgeber 18 auf, welcher nach dem Verbinden mittels Ultraschalleinwirkung der beiden Gehäusehälften 16 und 17 (in Figur 6 unten dargestellt) das Lot zum Schmelzen gebracht hat und die beiden Leiterbahnen 4 somit elektrisch miteinander verbunden hat. Ist das Element 18 als Druckelement (und nicht als Energierichtungsgeber) ausgeführt, übt es lediglich einen Druck auf den Kontaktbereich der beiden übereinanderliegenden Leiterbahnen 4 aus und stellt somit, ohne daß Lotmaterial vorhanden ist, die elektrische Verbindung her. Bei dieser Kontaktierungsart muß bei der Verbindung der beiden Gehäusehälften 16 und 17 während und nach der Ultraschalleinwirkung sichergestellt werden, daß diese beiden Gehäusehälften unter Druck aneinander liegen, damit das Druckelement 18 den erforderlichen Druck auf den Kontaktbereich ausüben kann.

In Figur 6 ist also ein Verfahren zum Herstellen einer elektrischen Verbindung zwischen zwei elektrisch leitenden Kontaktpartnern (Leiterbahnen 4) dargestellt, wobei die in einem Gehäuse (Gehäusehälften 16, 17) angeordneten Kontaktpartner innerhalb des Gehäuses in einem Kontaktbereich zusammengebracht sind und eine Kontaktierung unter Druck (mittels des Druckelementes 18) ohne Lotmaterial erfolgt. Dabei ist das zumindest eine Druckelement 18 (oder bei mehreren Leiterbahnen 4 auch mehrere entsprechend ausgebildete Druckelemente) so ausgebildet bzw. besteht aus einem solchen Material, daß das Druckelement 18 während und nach der Ultraschalleinwirkung seine Form behält und insbesondere keine Verbindung mit der Gehäusehälfte 17 oder einem Träger oder einer Ummantelung des elektrischen Leiters eingeht.

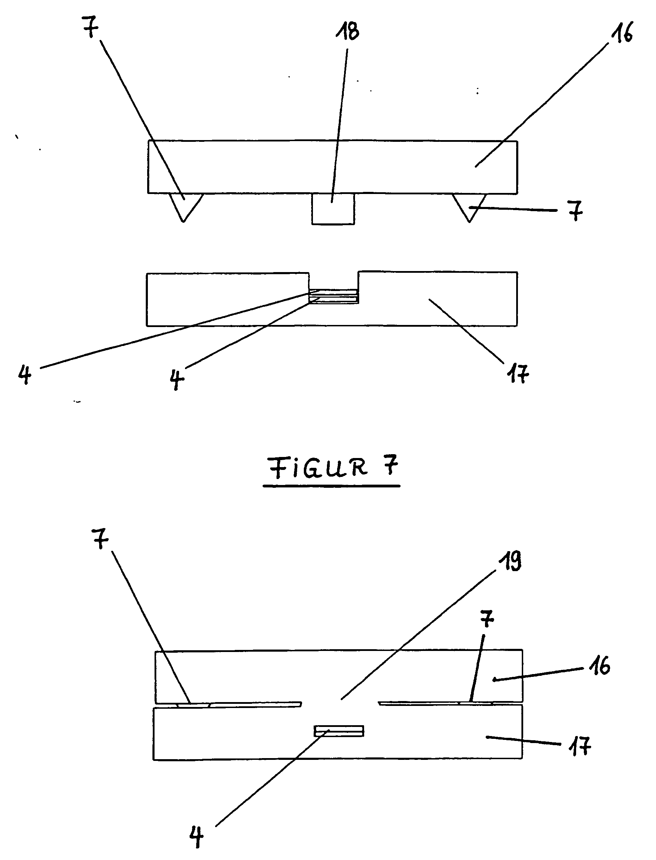

Alternativ hierzu ist in Figur 7 die gleiche Ausgestaltung wie in Figur 6 dargestellt, d. h. daß auch bei der Ausgestaltung gemäß Figur 7 die elektrische Kontaktierung der beiden Leiterbahnen 4 mittels Druck erfolgt, während die beiden Gehäusehälften 16 und 17 aus Kunststoff aufgrund der Ultraschalleinwirkung miteinander verschweißt werden. Im Unterschied zu der Ausgestaltung nach Figur 6 ist in Figur 7 vorgesehen, daß das Druckelement 18 derart ausgebildet ist bzw. aus einem Material besteht, so daß dieses Druckelement 18 während bzw. nach der Ultraschalleinwirkung seine Form verändert, insbesondere sich ebenfalls mit der Gehäusehälfte 17 verbindet, so daß ein verschweißter Druckbereich 19 entsteht. Dieser verschweißte Druckbereich 19 hat den Vorteil, daß einerseits aufgrund der Druckwirkung die beiden Leiterbahnen 4 miteinander kontaktiert sind und andererseits dieser Kontaktbereich gegenüber seiner Umgebung abgeschlossen ist, so daß insbesondere Feuchtigkeit und Schmutzpartikel keine Auswirkungen auf diesen Kontaktbereich haben.

## Patentansprüche

1. Verfahren zum Herstellen einer elektrischen Verbindung zwischen zwei elektrisch leitenden Kontaktpartnem, wobei die in einem Gehäuse angeordneten Kontaktpartner innerhalb des Gehäuses in einem Kontaktbereich zusammengebracht und im Kontaktbereich vorhandenes Lotmaterial durch Ultraschalleinwirkung zum Schmelzen gebracht wird, **dadurch gekennzeichnet, dass** das Gehäuse zumindest eine Erhebung (7) aufweist, die durch Ultraschalleinwirkung zum Schmelzen gebracht wird, wobei die dabei entstehende Wärmeenergie das Lotmaterial zum Schmelzen bringt.

2. Verfahren nach Anspruch 1, **dadurch gekennzeichnet, dass** mittels der Ultraschalleinwirkung mehrere Teile des Gehäuses miteinander verbunden werden.

3. Verfahren nach einem der Ansprüche 1 oder 2, **dadurch gekennzeichnet, dass** zumindest ein Kontaktpartner vor dem Verlöten verzinnt wird.

4. Verfahren nach einem der Ansprüche 1 bis 3, **dadurch gekennzeichnet, dass** im Kontaktbereich ein Reservoir mit Lötzinn vorhanden ist.

5. Verfahren nach einem der vorhergehenden Ansprüche, **dadurch gekennzeichnet, dass** die Kontaktpartner im Kontaktbereich stumpf aneinander stoßen.

6. Verfahren nach einem der vorhergehenden Ansprüche, **dadurch gekennzeichnet, dass** sich die Kontaktpartner im Kontaktbereich überlappen.

7. Anwendung des Verfahrens nach einem der vorhergehenden Ansprüche bei Steckverbindern in der Fahrzeugtechnik.

8. Anwendung des Verfahrens nach einem der vorhergehenden Ansprüche bei der Verbindung von Leitungen in der Fahrzeugtechnik.

## Claims

1. Method for producing an electrical connection between two electrically conducting mating contact members, the mating contact members arranged in a housing being brought together within the housing in a contact region and soldering material that is present in the contact region being made to melt by being exposed to ultrasound, **characterized in that** the housing has at least one elevation (7), which is made to melt by exposure to ultrasound, the thermal energy produced as a result making the soldering material melt.

2. Method according to Claim 1, **characterized in that** a number of parts of the housing are connected to one another by means of the exposure to ultrasound.

3. Method according to either of Claims 1 and 2, **characterized in that** at least one mating contact member is tin-coated before the soldering.

4. Method according to one of Claims 1 to 3, **characterized in that** a reservoir with soldering tin is present in the contact region.

5. Method according to one of the preceding claims, **characterized in that** the mating contact members butt against one another in the contact region.

6. Method according to one of the preceding claims, **characterized in that** the mating contact members overlap in the contact region.

7. Application of the method according to one of the preceding claims for plug-in connectors in automotive engineering.

8. Application of the method according to one of the preceding claims for the connection of lines in automotive engineering.

## Revendications

1. Procédé de production d'une connexion électrique entre deux partenaires de contact électriquement conducteurs, dans lequel les partenaires de contact disposés dans un boîtier sont rassemblés à l'intérieur du boîtier dans une région de contact et du matériau de brasage prévu dans la région de contact est amené en fusion sous l'effet de l'application d'ultrasons, **caractérisé en ce que** le boîtier présente au moins un rehaussement (7) qui est amené en fusion sous l'effet de l'application d'ultrasons, l'énergie thermique ainsi produite amenant le matériau de brasage en fusion.

2. Procédé selon la revendication 1, **caractérisé en ce que** plusieurs parties du boîtier sont connectées les unes aux autres sous l'effet de l'application d'ultrasons.

3. Procédé selon l'une quelconque des revendications 1 ou 2, **caractérisé en ce qu'**au moins l'un des partenaires de contact est étamé avant le brasage.

4. Procédé selon l'une quelconque des revendications 1 à 3, **caractérisé en ce qu'**un réservoir d'étain de brasage est prévu dans la région de contact.

5. Procédé selon l'une quelconque des revendications précédentes, **caractérisé en ce que** les partenaires de contact sont mis bout à bout dans la région de contact.

6. Procédé selon l'une quelconque des revendications précédentes, **caractérisé en ce que** les partenaires de contact se chevauchent dans la région de contact.

7. Utilisation du procédé selon l'une quelconque des revendications précédentes dans des raccords à fiches dans la technique automobile.

8. Utilisation du procédé selon l'une quelconque des revendications précédentes pour la connexion de lignes dans la technique automobile.
